# EUROPEAN PATENT APPLICATION

(11) **EP 2 238 962 A1**
(43) Date of publication of application: **13.10.2010**
(21) Application number: 09157713.0
(22) Date of filing: 09.04.2009
(51) Int. Cl.: A61H 39/04

(54) **Acupressure mat and acupressure member therefor**

(71) Applicant: Datura Trading Aktiebolag, 851 02 Sundsvall (SE)
(72) Inventor: Persson, Torbjörn, 862 34, KVISSLEBY (SE)
(74) Representative: Nikolopoulou, Sofia

(57) **Abstract**

An acupressure mat (10) adapted to support a body portion of a person resting thereon. According to the invention the mat comprises a flexible base structure (12) including a top face (16) having attached thereto a multitude of acupressure members (30). Each acupressure member has a multitude of protruding acupressure points (40).

## Description

### TECHNICAL FIELD

The invention relates to an acupressure mat adapted to support a body portion of a person resting thereon. The invention is also concerned with an acupressure member for such a mat.

### BACKGROUND

An acupressure mat is typically provided with a multitude of pointed spikes or nails in a preferably dense pattern intended to impart a physical pressure akin to acupuncture therapy to a portion, for example a back portion of the person resting on the mat. Prior art acupressure mats, however, are relatively complicated and expensive to manufacture due to the vast number of uniform spikes required on the mat to obtain the desired acupressure effect and comfort to the user.

### DISCLOSURE OF THE INVENTION

An object of the invention is to provide an acupressure mat that is capable of being provided with a dense pattern of uniformly shaped acupressure points to a low cost.

In an aspect of the invention, the acupressure mat comprises a flexible base structure having a top face and a multitude of acupressure members attached to the top face, wherein each acupressure member is formed with a multitude of protruding acupressure points. By the mat being formed of a multitude of separate acupressure members that in turn has a multitude of acupressure points, the manufacture of the mat may be significantly simplified by mass production of relatively simple parts that can be easily attached to the base structure by a mechanized operation. Importantly, by using separate acupressure members, each having only a fraction of the total number of acupressure points of the resulting mat, the uniform shape, height and sharpness of each individual point will also be more easy to control and calibrate.

In one embodiment, the base structure comprises a resilient panel of a foamed synthetic resin having a textile cover. Thereby a simple and reliable base structure may be provided to a low cost.

The bottom surface of each acupressure member may be attached by ultrasonic welding to the top face of the base structure. Thereby it may be possible to further simplify the manufacture by attaching all acupressure members to the base structure in a single automated operation after placing them onto the base structure.

While, the acupressure members may have any suitable shape, for example a rectangular shape, each acupressure member in one embodiment according to the invention, is formed as a circular disc such as by injection molding.

Further, each acupressure point may generally have the shape of a pyramid. The pyramid shape is suitable for simple and cost effective injection molding and provides for easy adaptation of the sharpness to surface density of the acupressure points by variation of pyramid top angles.

Moreover, the acupressure points may be arranged in a pattern of concentric circles. Thereby the acupressure members can have an appealing flower appearance while at the same time being capable of uniform distribution on the available surface.

Typically, each acupressure member may have a density of acupressure points of about between 4/cm² and 6/cm².

Other objects and advantages of the invention may be apparent from the claims and the following description of embodiments.

### BRIEF DESCRIPTION OF THE DRAWING

FIG. 1 is a diagrammatic top view of an acupressure mat according to the invention;

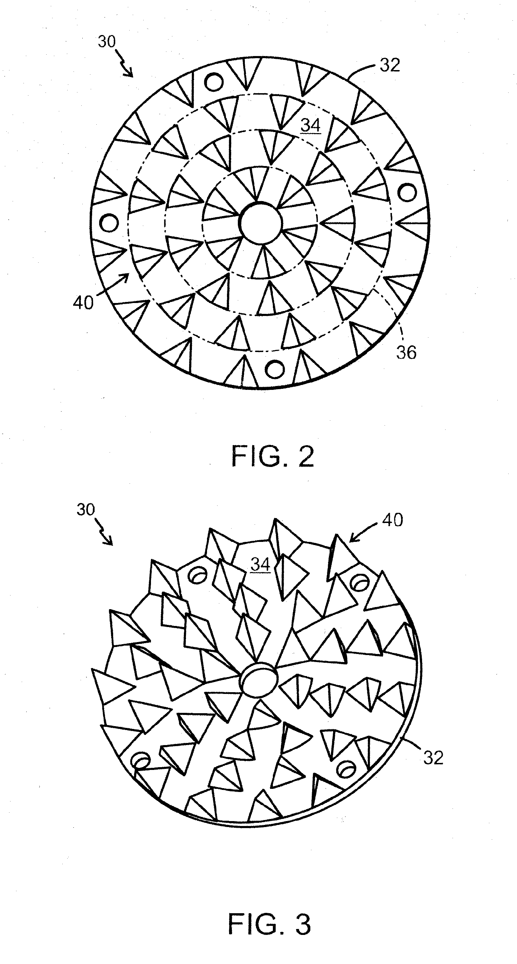

FIG. 2 is a top plan view of a support member of an acupressure mat according to the invention; and
FIG. 3 is an oblique top view of the support member shown on FIG. 2.

### DETAILED DESCRIPTION OF EMBODIMENTS

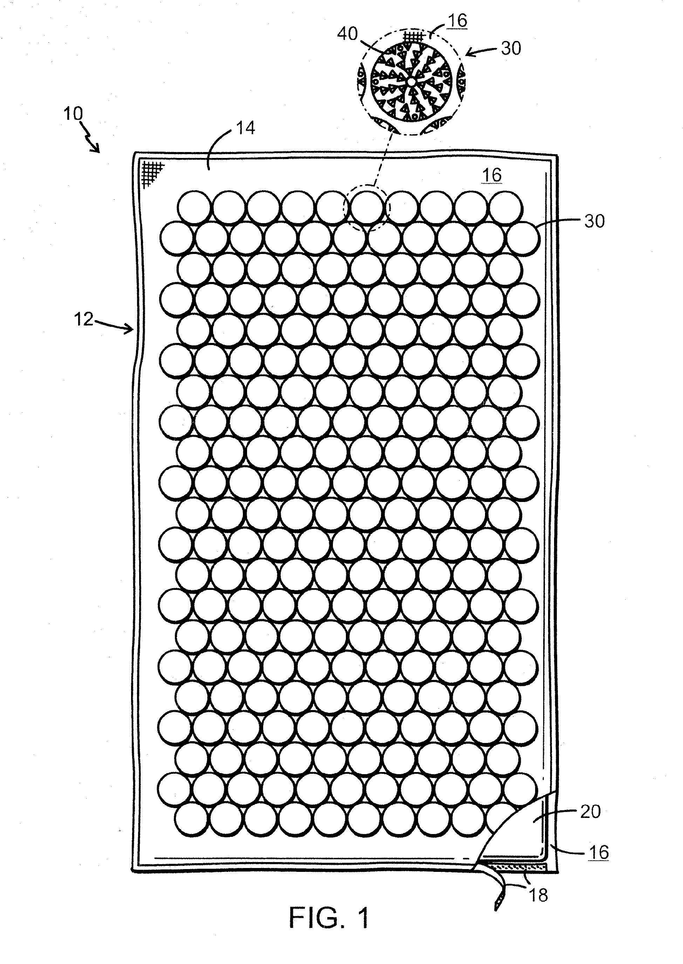

The acupressure mat 10 shown in FIG. 1 comprises a base structure 12 including a flexible panel 20 of a foamed resilient synthetic resin received in a cover 14 composed of a pair of textile sheets 16, for example cotton sheets, attached by suitable seams or stitches at their edges. The panel 20 may optionally be removed from and inserted into the cover 14 through an opening formed between the sheets 16 along an edge of the mat 10. The opening may be releasably sealed for example by a pair of Velcro strips 18.

A multitude of acupressure members 30 are attached to an external face 14 of the top textile sheet 16 by a preferably automated ultrasonic welding operation. In the embodiment of FIG. 1, the mat 10 has a typical rectangular dimension of about 78 x 46 cm and the number of acupressure members 30 may then be, for example, 210. While the members 30 are shown in a dense packed configuration, they may also be distributed by a certain space from each other, for example to allow for easy folding of the mat 10.

While the acupressure members according to the invention may have any suitable shape, in the embodiment shown, the acupressure members 30 have the shape of circular discs 32 made from an injection molded plastics material such as ABS. Each member 30 has a multitude of acupressure points 40 in a general shape of pyramids projecting from the top surface 34 of disc 32. More precisely, in the embodiment shown, the acupressure points 40 are evenly distributed in a "corolla-like" pattern of concentric circles 36 on the top surface 34. The pyramid shape provides for easy release of the injection molds and easy control of the sharpness of points 40. In the example shown, each member 40 has a diameter of about 32 and 42 acupressure points 40 resulting in a total of 8820 acupressure points on the mat 10 shown on FIG. 1. The density of points on the acupressure member may typically be about between 4 and 6 per cm². Each point may further typically project about 5 mm from the surface 34 of the disc 32.

The foregoing detailed description is given primarily for clearness of understanding and no unnecessary limitations are to be understood therefrom. Modifications will become obvious to those skilled in the art upon reading this disclosure and may be made without departing from the spirit of the invention or the scope of the appended claims.

## Claims

1. An acupressure mat (10) adapted to support a body portion of a person resting thereon, **characterised by**
a flexible base structure (12);
a multitude of acupressure members (30) attached to a top face of the base structure;
each acupressure member having a multitude of protruding acupressure points (40) formed thereon.

2. The acupressure mat according to claim 1, wherein the base structure (12) comprising a panel (20) of a resilient foamed synthetic resin having a textile cover (14).

3. The acupressure mat according to claim 1 or 2, wherein a bottom surface of each acupressure member (30) being attached by ultrasonic welding to the top face (16) of the base structure (12).

4. The acupressure mat according to any of the previous claims, wherein each acupressure member (30) being formed as a circular disc (30) by injection molding.

5. The acupressure mat according to any of the previous claims, wherein each acupressure point (40) having substantially the shape of a pyramid.

6. The acupressure mat according to any of the previous claims, wherein the acupressure points (40) are arranged in a pattern of concentric circles (36).

7. The acupressure mat according to any of the previous claims, wherein each acupressure member having a density of acupressure points of about between 4/cm² and 6/cm².

8. An acupressure member (30) according to any the previous claims for an acupressure mat (10) according to any the previous claims.
